# EUROPEAN PATENT SPECIFICATION

(11) **EP 0 426 338 B1**
(45) Date of publication and mention of the grant of the patent: **22.03.1995**
(21) Application number: 90311496.5
(22) Date of filing: 19.10.1990
(51) Int. Cl.: B60G 17/01, F16F 9/46

(54) **Vehicle suspension apparatus**
Vorrichtung zur Fahrzeugaufhängung
Dispositif de suspension de véhicule

(30) Priority: 02.11.1989 US 430859
(43) Date of publication of application: 08.05.1991
(73) Proprietor: GENERAL MOTORS CORPORATION, Detroit Michigan 48202 (US)
(72) Inventor: Majeed, Kamal Naif, Centerville, Ohio 45459 (US)
(74) Representative: Denton, Michael John

(56) References cited:
- EP-A- 0 114 757
- EP-A- 0 246 772
- Proceedings IEEE/Applications of Automotive Elec tronics, Dearborn, Michigan,Oct 19, 1988 pp39-44, "Dual Processor Automotive Controller" K.N.Majeed
- PATENT ABSTRACTS OF JAPAN vol. 13, no. 334 (M-855)(3682) 27 June 1989,& JP-A-1 111 515 (TOYOTA CENTRAL R&D LAB. INC.) 28 April 1989
- PATENT ABSTRACTS OF JAPAN vol. 13, no. 305 (M-849)(3653) 13 July 1989,& JP-A-195924 (NISSAN MOTOR CO LTD) 14 April 1989,
- ASME Publication vol. 1, 1985, pages 341 - 346; D.Karnopp: "Two contrastingversions of the optimal active vehicle suspension"

## Description

This invention relates to vehicle suspension apparatus of, for example, the type in which an actuator is controlled in real time to exert a variable force between the vehicle body and wheel. The invention provides, for example, real time control of vehicle suspension tuning during vehicle operation.

In active or semi-active controlled suspensions, an actuator force may be controlled in response to control signals derived as linear combinations of one or more state variable signals, which are themselves derived from sensed vehicle variables. Such linear controls have gains determining the relative contribution of each state variable to each output force. Various combinations or sets of gains can be developed to produce suspension controls which emphasize different suspension performance qualities. For example, a first set of gains could emphasize isolation of the body from the road surface to produce a soft, comfortable ride. A second set of gains could emphasize wheel control to provide exceptional traction on rough roads. Yet another set of gains could emphasize body control to maintain body attitude during vehicle turns, acceleration and deceleration. The precise values of the gains differ for each set and are dictated by the physics of the vehicle in view of the desired vehicle suspension behaviour.

It has long been known by those skilled in the art that these desirable ride and handling goals are not simultaneously maximized in any suspension of fixed characteristics; and designers have therefore been forced to produce compromise suspension designs. This limits the degree to which any of the ride and handling quality goals may be met.

Prior art has shown damper systems which respond to sensed road profile to change the dampers between firm and soft settings. These systems use dampers having variable orifice members which must be physically moved among various positions, with inertia, friction and, often, the necessity to move against a high fluid pressure providing delays in response. The controllers of these systems, when they respond to road inputs, choose damper settings on the basis of road profiles generated from an average of road input over time. Those systems which respond more quickly to stop and turn signals to maintain body attitude provide a fixed control algorithm. The range of suspension control of such systems is generally limited to switching between a few fixed damper settings, which are held for a significant time until a new road profile can be determined.

JP-A-1/111,515 discloses a variable damping force-type suspension controller corresponding to the preamble of claim 1 in which the movement of the suspension and of the vehicle as a whole are detected to predict the variations in the state of the vehicle, thereby to compute a target controlling force. The target controlling force is used to select optimum feedback control gains for controlling the suspension characteristics.

A controller for providing automatic variable damping in a vehicle was presented to the IEEE by the inventor Kamal N Majeed in a paper entitled "Dual Processor Automatic Controller", published in the proceedings of the IEEE/Applications of Automotive Electronics, Dearborn, Michigan on 19 October 1988. Further details of this controller are given in the following description.

The present invention seeks to provide improved vehicle suspension apparatus.

According to an aspect of the present invention, there is provided suspension apparatus characterised over the prior art by the features in the characterising part of claim 1.

A vehicle suspension can be given different characteristics by choosing different sets of gain values. Vehicle suspension tuning can be software controlled by the controller, which switches between the alternative sets of gains values.

The controller may use a set of isolation gains until the vehicle encounters a road profile that degrades tyre control, whereupon the controller can be switched to wheel gains to improve wheel control. When the road again becomes smooth, the controller can be switched back to the isolation gains. The system can sense and request such changes within a single one millisecond control loop and generate a wide variety of software controlled suspension tunings or behaviors with the use of active actuators, continuously variable dampers or on/off dampers.

The suspension actuator may be a hydraulic or electric actuator capable of providing power to the suspension, as used in a fully active suspension controller. Alternatively, it may be a variable damper, capable only of dissipating power, as used in a semi-active suspension controller, in which case it may provide damping control either in a continuous or a discrete manner.

An embodiment of the present invention is described below, by way of illustration only, with reference to the accompanying drawings, in which:
Figure 1 is a schematic diagram of a motor vehicle fitted with an embodiment of suspension apparatus;
Figure 2 is a cross-sectional view of a variable damper for use as a suspension actuator in the suspension apparatus of Figure 1;
Figure 3 is a typical set of force/velocity curves for the variable damper of Figure 2;
Figure 4 is a block diagram of a controller for use in the suspension apparatus of Figure 1;
Figure 5 shows a mathematical model of the vehicle of Figure 1; and
Figures 6-10 are flow charts illustrating the operation of the suspension apparatus of Figure 1.

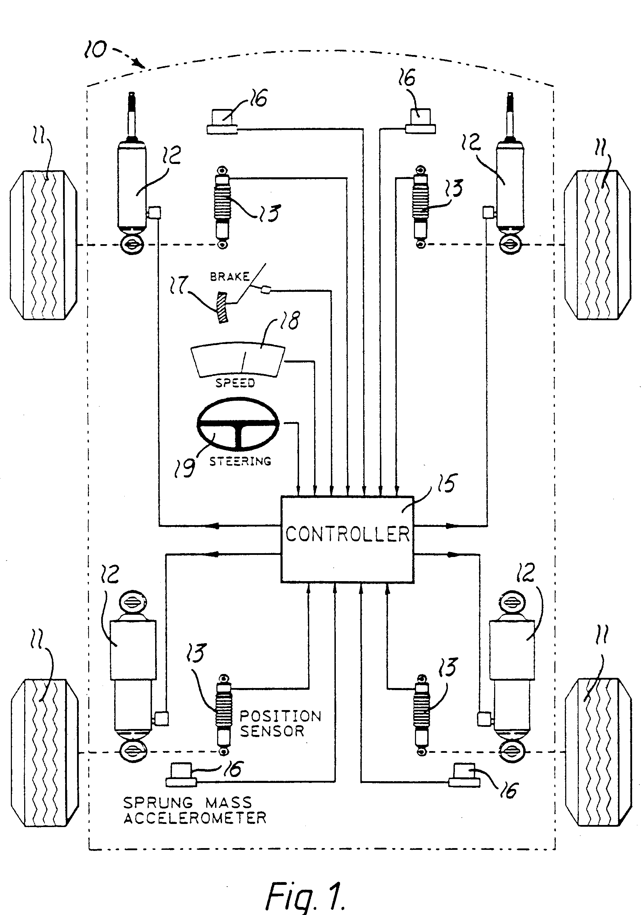

Figure 1 shows a schematic diagram of a motor vehicle with an embodiment of suspension apparatus. The vehicle comprises a body 10 which can be thought of as a sprung mass, and four wheels 11 which, together with some of the vehicle suspension units, form an unsprung part of the vehicle. The body 10 is generally rectangular in shape and supported at each corner, or suspension point, on a wheel 11 by means of suspension apparatus 12. The suspension apparatus comprises for each suspension point a weight-bearing suspension spring connected in parallel with a suspension actuator. Each actuator is disposed to exert a controllable force on the body 10 and wheel 11 at its respective suspension point, in parallel with the spring.

The apparatus 12 is shown simply as a damper, although it is to be understood that a spring, such as a standard coil suspension spring, is connected in parallel with it.

The suspension apparatus 12 further includes an axle for rotatably supporting wheel 11 and such other suspension components, for example control arms, as are commonly used in suspension systems. These components are not described in detail here.

At each suspension point, a suspension position sensor 13 is connected between the body and the wheels to measure the relative vertical position between them, and is adapted to generate an output signal indicative of this measure for input to a controller 15. A position sensor suitable for such a purpose is the sensor known as the LVDT sensor, available from, among others, Nartron Corporation of Reed City, Michigan.

The signal output by each sensor 13 may be differentiated to produce a body/wheel vertical velocity signal.

An accelerometer 16 is also positioned at each suspension point of body 10 to generate a vertical acceleration signal for its respective suspension point, and is, in this case, an absolute acceleration signal. This is input into the controller 15. An accelerometer suitable for use in this system is made by First Inertia Corporation of Hampshire, England. This accelerometer is of the type which gives an absolute measure of acceleration and, as with such accelerometers, should be mounted with care so as to minimize cross-axis sensitivity which might contaminate the vertical acceleration signal with horizontal acceleration information. Integration of the absolute vertical acceleration signal by the controller 15 provides a vertical body corner velocity signal for each suspension point. From the difference of these signals, the controller 15 is able to compute the vertical wheel velocity.

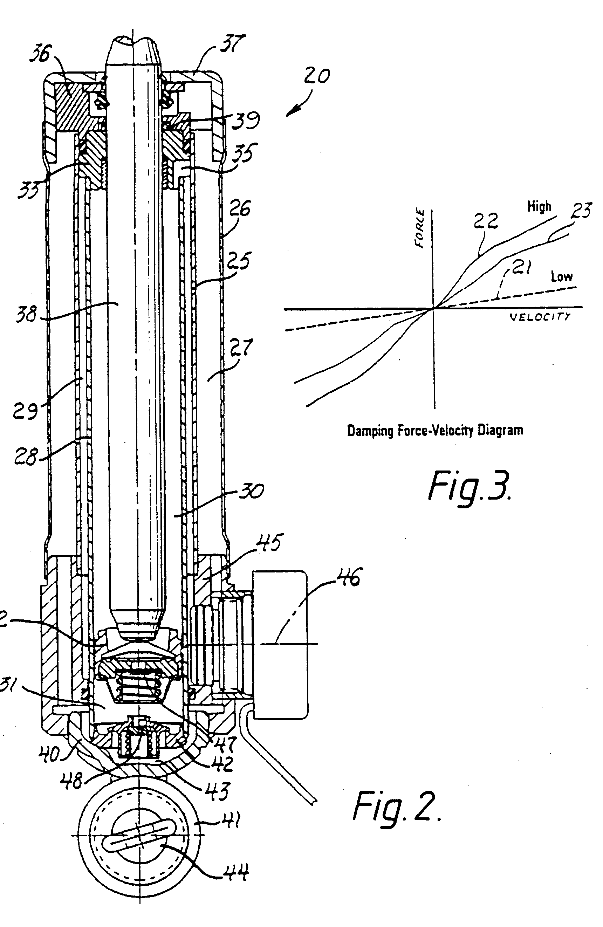

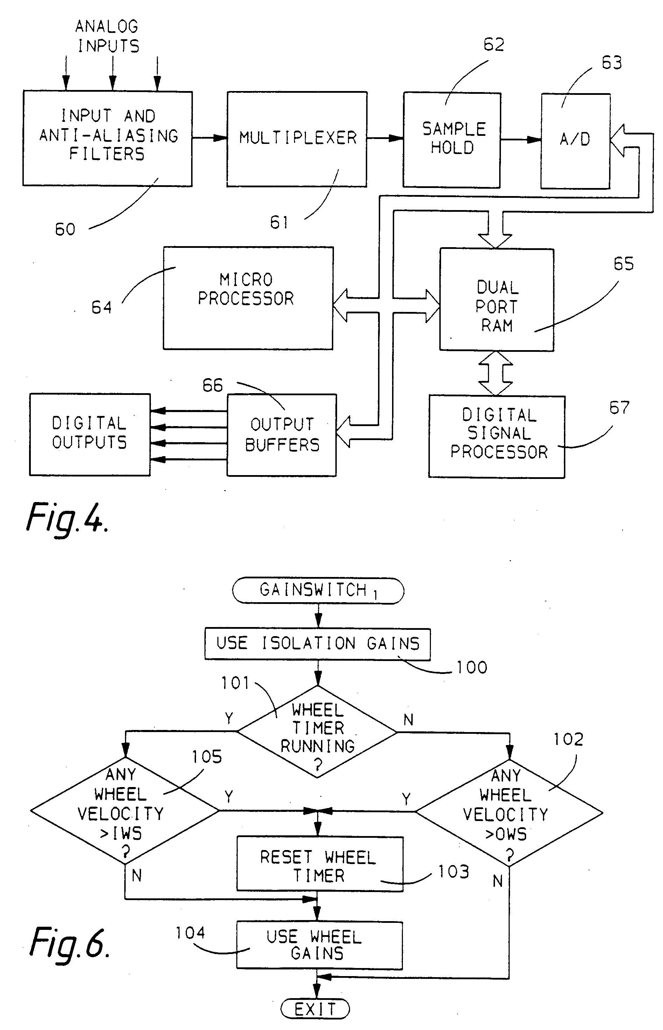

The suspension controller of this embodiment is an on/off semi-active controller using a discrete variable damping actuator of the type shown as damper 20, shown in more detail in Figure 2, and having a dual force/velocity curve of the type shown in Figure 3. Damper 20 is a standard vehicle shock or strut modified by the addition of a bypass passage adapted to be opened or closed by a bypass valve which is capable of high frequency operation for real time, on/off damping control. With the bypass valve open, the damper has a low damping force curve such as curve 21 in Figure 3; while with the bypass valve closed, the damper has a high damping force curve, such as curve 22 of Figure 3.

As can be seen in Figure 2, the variable damper 20 comprises inner and outer reservoir tubes 25 and 26, respectively, defining therebetween a reservoir 27. A central pressure cylinder 28 is located axially within inner reservoir tube 25 and defines with it an annular passage 29. The space within central pressure cylinder 28 is divided into upper and lower chambers 30 and 31, respectively, sealed from one another by an axially slidable piston 32. Upper chamber 30 and annular passage 29 are closed at their upper ends by a pressure closure member 33 which provides relatively unrestricted communication between chamber 30 and passage 29 through an opening 35. Reservoir 27 is closed at its upper end by a reservoir closure member 36 and an upper end cap 37.

Piston 32 is attached to the lower end of a reciprocating piston rod 38, which extends upward through openings in members 33, 36 and end cap 37 for attachment to a suspension point in the manner normal for shocks or struts. High pressure and lag seals are provided in members 33 and 36, respectively; and a lower pressure seal is provided in end cap 37 around piston rod 38. Since there will be some fluid leakage past the high pressure and lag seals, a return passage 39 is provided through reservoir closure member 36 to reservoir 27.

The lower end of damper 20 comprises an outer closure cap 40 rigidly attached to reservoir tubes 25 and 26 and pressure cylinder 28 and connected in the normal manner to a member of the unsprung part of the vehicle, more specifically to control arm 44, to which a wheel 11 is attached, by means of a standard fitting 41. An inner closure cap 42 closes the bottom of lower chamber 31 and defines a lower reservoir chamber 43 between closure caps 40 and 42 which is connected to reservoir 27.

A lower closure member 45 closes the lower end of reservoir 27 and annular passage 29 and further provides mounting for an electrically activated bypass valve apparatus 46 which, in response to a signal from controller 15, controls communication between the annular passage 29 and the reservoir 27 by way of lower reservoir chamber 43. Since damper 20 is to respond to the controller in real time to control wheel as well as body movements, valve 46 must be capable of moving between its closed and open positions at a frequency significantly greater than the resonant wheel (unsprung mass) vibration frequency, preferably at at least twice the vibration frequency and preferably higher. For example, a typical resonant wheel vibration frequency is 12 Hz. Thus, the valve of damper 20 should respond at least up to 24 Hz and preferably up to 50 Hz. A valve suitable for use as valve 46 is a solenoid cartridge valve such as the Waterman Hydraulics (R) Series 12, a normally closed valve with a 19 litre per minute capability.

Piston 32 contains standard shock piston valve and orifice apparatus 47 including one or more throttling orifices, a rebound blowoff valve and a compression check valve. Inner closure cap 42 contains standard shock base valve apparatus 48 including one or more throttling orifices, a compression blowoff valve and a rebound check valve. These valves and orifices provide compression and rebound damping force characteristics of the type well known in the art, and, specifically, adapted to produce the high damping force curve 22 of Figure 3 when the bypass valve apparatus 46 is closed so as to prevent direct communication between the annular passage 29 and the reservoir 27.

Typically, in extension or rebound, upward movement of piston 32 causes throttled flow through the orifices and, at high velocity, movement of the blowoff valve of piston 32. This flow is equal to the decrease in the annular volume of upper chamber 30; and a flow of fluid to compensate for the volume of displaced piston rod 38 is drawn into lower chamber 31 from reservoir 27 in a relatively unrestricted manner through the check valve of base valve apparatus 48. Thus, fluid will flow into the lower chamber 31 from both the upper chamber 30 and the reservoir 27.

Likewise, in compression, downward movement of piston 32 drives fluid out of lower chamber 31 in a relatively unrestricted manner through the check valve of piston valve and orifice apparatus 47. The fluid flow comprises a component equal to the increase in the annular volume of upper chamber 30 through the orifice apparatus 47, plus a component equal to the volume of displaced piston rod 38 through the base valve apparatus 48. At high velocity, the blowoff valve of the base valve apparatus 48 is pushed away from the valve seat against the action of its associated spring to increase the fluid flow rate.

With bypass valve apparatus 46 open to allow direct communication between annular passage 29 and reservoir 27, the apparatus will produce the low damping force curve 21 of Figure 3. In extension, the displaced fluid from upper chamber 30 finds a comparatively unrestricted flow path through the open valve of apparatus 46 into reservoir 27; and the full increase in volume of lower chamber 31 flows relatively unrestricted from reservoir 27 through the check valve of base valve assembly 48 into lower chamber 31. In compression, a fluid flow equal to the full decrease in volume of lower chamber 31 finds relatively unrestricted passage through the check valve of piston valve and orifice assembly 47; and a flow equal to the displaced rod 38 volume finds relatively unrestricted passage from upper chamber 30 through the open valve of apparatus 46 into reservoir 27.

The hardware configuration of controller 15 is shown in schematic and block diagram form in Figure 4. The analog inputs from sensors 13, 16, and 17 to 19 are processed in input apparatus 60, which includes sensor interface circuitry, anti-aliasing filters and any additional analog signal processing circuitry, such as circuitry for differentiating the relative position signals from sensors 13 to form relative velocity signals. The integration of the body corner acceleration signals from sensors 16 may also be performed by this circuitry but is preferably performed in software within the digital circuitry to be described.

With regard to the input signals, it should be noted that the controller has been found to work well, at least in the case of an on/off damping actuator, with a loop frequency of 1 KHz, which means that, to avoid aliasing distortion, the input signals should be filtered through a low-pass filter to avoid any significant input signals at frequencies above 500 Hz.

The differentiator, especially, should be designed with care, since differentiation, by nature, accentuates the high frequencies in the signal and heavy filtering tends to introduce phase delays which can slow system response.

The processed and filtered input signals are read into the system by a multiplexer 61, which feeds each signal in turn to a sample-and-hold circuit 62 and to an analog-to-digital (A/D) converter 63. The signals can be pipelined through this portion of the apparatus to speed data read-in.

The output of the A/D converter 63 is fed to an eight-bit data bus which is connected to a microprocessor 64, RAM 65 and output buffers 66. A separate 16 bit-data bus connects dual port RAM 65 to a digital signal processor 67.

Microprocessor 64, which may, for example, be one of the 68HC11 family made by the Motorola (R) Corporation, contains the basic system operating software and controls the data handling and decision making tasks of the controller. The signal processor 67, which may be a TMS320C15 or TMS320C17 processor made by Texas Instruments (R) Corporation, is optimized for mathematical computations such as multiplication, which would greatly slow down a general purpose microprocessor 64. Such multiplications are used both in the solution of the control equations and in a digital integration routine.

Output buffers 66 interface the signal processor with the four actuators 12 and may further include digital low pass filtering to prevent output of signals at frequencies higher than those to which the actuators 12 are adapted to respond. For the embodiment shown, output buffers 66 need only be digital buffers, since the output control signals to the actuators are single-bit digital signals selecting high or low damping. In a continuous active or semi-active system, however, suitable digital-to- analog converters would be inserted before the output buffers 66.

A more complete description of the apparatus can be found in the paper "Dual Processor Automotive Controller" by Kamal N. Majeed, published in the proceedings of the IEEE/Applications of Automotive Electronics, Dearborn, Michigan, Oct. 19, 1988. However, cost savings may be achieved in a mass produced system by the replacement of the dual port RAM 65 with ordinary RAM and the use of a software controlled interface bus between the microprocessor and the signal processor 67 and a three line serial interface for input and output.

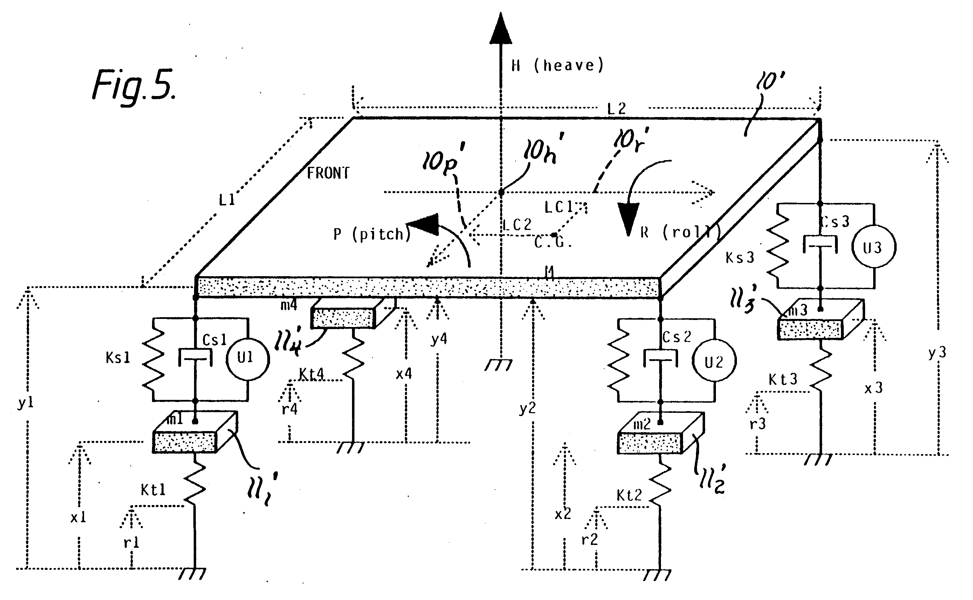

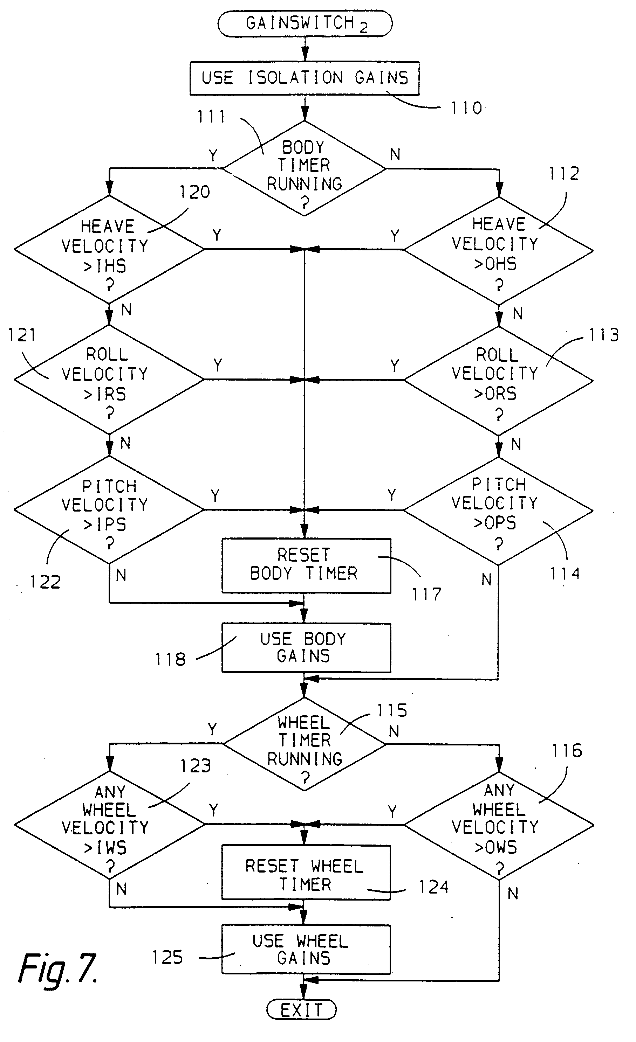

The control implemented by controller 15 may be better understood with reference to the model shown in Figure 5 and the flow charts of Figures 6-10. Referring to Figure 5, a vehicle body or sprung mass 10' with a mass M is an idealized model of the vehicle body 10 shown in Figure 1. Movement of body 10' is defined with respect to a point 10h' and axes 10p' and 10r'. Vertical movement of point 10h' is represented as heave H. Rotational movement of body 10' about axis 10r', which passes through point 10h' and is aligned front to rear with respect to body 10' is represented as roll R. Rotational movement of body 10' about axis 10p', which passes through point 10h' and is aligned right side to left side with respect to body 10', perpendicular to axis 10r', is represented as pitch P.

At each corner of body 10', a substantially unsprung mass 11ᵢ' (i =1,2,3,4), which is an idealized model of wheel 11 of Figure 1 (in combination with the other elements contributing to the unsprung mass) has a mass mᵢ. Each unsprung mass 11ᵢ' rests on the ground and has a spring constant kₜᵢ, representing the tyre spring force. It is also connected to its respective suspension point on the body 10' with a spring constant kₛᵢ representing the suspension spring force, a damping constant cₛᵢ representing the suspension damper, and an external actuator force U_{;} representing the force applied by the suspension apparatus 12.

The position of each unsprung mass 11ᵢ' with respect to an inertial reference frame is represented as x_{;}, while the position of the respective suspension point of body 10' with respect to the same reference frame is represented as y_{;}. Figure 5 also shows the position rᵢ of the road at each unsprung mass 11ᵢ' with repsect to the same inertial reference frame.

The effective length L₂ of body 10 is the distance parallel to axis 10r' between supporting points of front and rear unsprung masses on the same side of body 10. Similarly, the effective width L, of body 10 is the distance parallel to axis 10p' between supporting points of corresponding left and right unsprung masses.

A vehicle model chosen to have seven degrees of freedom requires 14 states, which are chosen here as six body states, including the heave, roll and pitch positions and velocities (H,R,P, H, R, P) and, for each suspension point, wheel position, and velocity (xᵢ,xᵢ). The controller, however, does not use all 14 states. Rather, it uses mainly the velocities as feedback variables and, in the semi-active case, only the velocities.

On the basis of this, the force on each wheel (i = 1,2,3,4), in the case of a fully active suspension, can be given as: 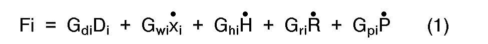 where Dᵢ is the suspension displacement (yᵢ-xᵢ), xᵢ is the wheel velocity, H is the heave velocity, R is the roll velocity, P is the pitch velocity and G_{di},G_{wi}, Gₕ;, Gᵣᵢ; and Gp; are the gains for the contribution of the respective state variables to the force F_{;}.

For semi-active suspension control, with actuators that provide only a damping force, the first term of equation (1) may be eliminated, since it corresponds to a dominant part of the active power required. The force on each wheel in the case of semi-active control can be given as:

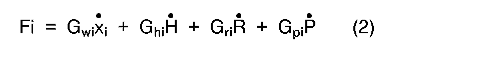

The controller thus combines a local state variable indicative of wheel velocity with centralized state variables indicative of body velocities in the most relevant three modes of heave, roll and pitch and, only in the case of fully active suspension control, a state variable indicative of suspension displacement, which helps control the resonant vibration frequencies of the suspension apparatus (especially to allow lowering the body mode frequency from 1 Hz to about 0.3 Hz). With such control, the desired force between the body and each wheel is substantially independent of the velocities of the other wheels, and provides local control of wheel hop or vibration. In addition, the contributions of body velocities are separated into heave, roll and pitch modes to assist precise tuning of the suspension for body as well as wheel movement.

Another version of the control equation for a semi-active suspension may be expressed in the following equation: 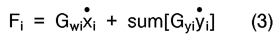 where the first term is identical to the wheel velocity term in equation (2) but the heave, roll and pitch velocity terms have been replaced by a linear combination of body corner velocities y, using gains G_{yi}.

For an absolutely rigid vehicle body, three of the four body corner velocities would be sufficient to provide an equivalent for roll, pitch and heave velocities. However, since no vehicle body is absolutely rigid, more accuracy will be obtained by using all four body corner velocities. In addition, it would be possible to use only two diagonal body corner velocities in a control system with an additional reduction in accuracy.

It will be seen at a later point in this description that the heave, roll and pitch velocities may be mathematically computed from the body corner velocities; however, use of equations 1, 2, 3 eliminates the need for such mathematical computation thereby saving computer computational time and hardware.

For the semi-active controller, the use of velocity feedback only results in the demand power being mostly dissipative (90 percent of the time), due to the phasor relationships involved. The controller is thus naturally well suited to semi-active suspension control such as that of this embodiment.

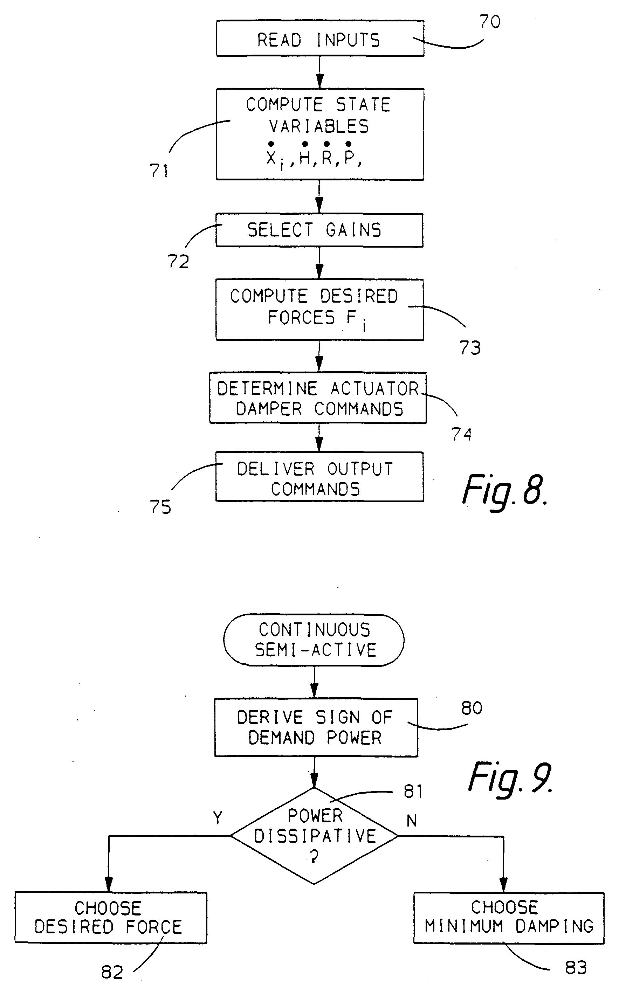

Referring to Figure 8, the main control sequence provides for the reading of inputs (70), followed by the derivation of state variables (71). The state variables x_{;}, H,R and P are then derived from the sensed inputs as follows.

The input signal from acceleration sensor 16 at a particular suspension point of the vehicle is integrated to provide the vertical body corner velocity yᵢ. The input signal from the relative suspension displacement sensor 13 at the suspension point is differentiated to provide the relative body/wheel vertical velocity yᵢ-xᵢ. The difference between the vertical body corner velocity yᵢ and the relative body/wheel velocity yᵢ-xᵢ yields the vertical wheel velocity x_{;} at that suspension point.

It should be noted that both the vertical body corner velocity yᵢ and the vertical wheel velocity x_{;} are absolute velocities, referenced to an intertial reference frame and not to the road.

The heave, roll and pitch velocities H,R and Pare derived from the vertical body corner velocities yᵢ at the four suspension points according to the following equations, wherein all variables are velocities:

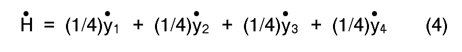

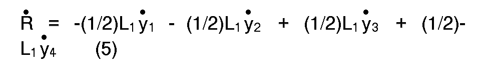

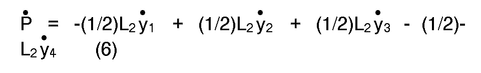

Continuing with the flow chart of Figure 8, the loop next selects system gains. Since no vehicle suspension can simultaneously maximize all aspects of vehicle ride and handling, the gains G_{wi}, Gₕᵢ, Gᵣᵢ and Gp; are ordinarily computed during system development for a particular desired suspension behavior. For example, one set of gains for a particular vehicle may emphasize wheel control for maximum tyre traction on rough road surfaces; whereas a different set of gains may emphasize body movement and attitude control during vehicle cornering or braking. Yet another possibility is a set of gains which produces a very soft, comfortable ride when the road surface is comparatively smooth, with only small amplitude, high frequency road input to the suspension.

A simple example of such gain switching is shown in the flow chart of Figure 6. In this example, two sets of gains are stored permanently in system memory: (1) a set of isolation gains known to produce a soft ride for maximum comfort; and (2) a set of wheel gains known to produce maximum wheel hop control for traction on washboard and other rough road surfaces which excite the wheel at its resonant vibration frequency.

The flow chart of Figure 6 shows GAINSWITCH1 (elements 100-105), which is a portion of the control program that determines which set of gains will be used in the calculation of desired wheel forces. GAINSWITCH1 chooses isolation gains except when a wheel velocity becomes sufficiently large to indicate the need for wheel gains to control wheel motion. More specifically, GAINSWITCH1 starts by assuming a default set of isolation gains (100). If the wheel timer is not running (101) and the velocities x_{;} of all wheels are within an outer wheel switchband OWS (102), the default isolation gains are retained as the chosen gains. If the wheel timer is not running (101) but the velocity of any wheel is outside the outer wheel switchband OWS (102), the wheel timer is reset (103) and the set of wheel gains is chosen (104) in place of the isolation gains.

GAINSWITCH1 uses a wheel timer to command use of the chosen wheel gains for a predetermined minimum time and to indicate, during each successive cycle of the control program, whether such wheel gains have been in use. The necessary timing can be produced by decrementing a counter, which may be a register such as a RAM memory location which has been loaded with a number, such as 4, to provide the required interval.

The system provides hysteresis, so that, once a wheel velocity goes outside the outer wheel switchband OWS, all wheel velocities must fall within an inner wheel switchband IWS before the controller switches back to the isolation gains. In addition, there is a time delay before the controller switches back to the isolation gains even after all wheel velocities change to fall within the inner wheel switchband IWS. Thus, if the wheel timer is running (101) and any wheel velocity is outside the inner wheel switchband (105), the wheel timer is reset (103) and the wheel gains are chosen. If the wheel timer is running (101) but all wheel velocities are within the inner wheel switchband (105), the wheel gains are chosen (104) but the timer is not reset and is thus allowed to be decremented. Therefore, when all wheel velocities go within the inner wheel switchband IWS, the wheel gains will still be used for the wheel timer period before the controller switches back to the isolation gains.

Another embodiment, having a more sophisticated procedure, is shown in Figure 7, in which a set of body gains is added to provide maximum body attitude control when large body velocities are detected. Flowchart GAINSWITCH2 (elements 110-125) of Figure 7 starts by assuming a default set of isolation gains (110). The control then determines if a body timer, of the type used in step (101) of Figure 6, is running (111), to check if the set of body gains is already in use. If the body timer is not running, the heave, roll and pitch velocities are compared to outer heave (112), roll (113), and pitch (114) switchband values, respectively. If they are all within these outer switchbands, the control then determines if the wheel timer is running (115). If not, the control determines if a wheel velocity is outside an outer wheel switchband (116), as in the example of Figure 6. If all wheel velocities are within the outer wheel switchband, this portion of the loop is exited with the isolation gains chosen.

If any of the heave, roll or pitch velocities are outside their respective outer switchband values (112, 113, 114), the body timer is reset (117) and the body gains are chosen (118). Then, if the wheel timer is not running (115) and the wheel velocity is within its outer switchband value (116), this portion of the control loop is exited with the body set of gains chosen. If the body timer is running (111) and one or more of the heave, roll or pitch velocities are outside their respective inner heave, roll or pitch switchbands, the body timer is reset (117) and the body gains chosen (118). If the body timer is running (111) but none of the heave, roll or pitch velocities is outside its respective inner switchband (120, 121, 122), the body gains are chosen (118) without resetting the body timer.

However, regardless of whether body or isolation gains are chosen as described above, if the wheel timer is running (115) or any wheel velocity is outside the outer wheel switchband OWS (116), the wheel gains will be chosen over body or isolation gains in a manner similar to that described in the example of Figure 6. If the wheel timer is not running (115) but a wheel velocity is outside the outer wheel switchband OWS (116), or if the wheel timer is running (115) and any wheel velocity exceeds the inner wheel switchband IWS (123), the wheel timer is reset (124) and wheel gains are chosen (125). If the wheel timer is running (115) but no wheel velocity exceeds the inner wheel switchband IWS (123), wheel gains are chosen without reset of the wheel timer, which allows the wheel timer to be decremented.

In the example of Figure 7, the body and wheel timers are operated independently of each other but in a similar manner to one another. Wheel gains, when chosen, always take the highest priority; and body gains, chosen in the absence of wheel gains, take priority over isolation gains.

Referring again to Figure 8, once the gains are chosen (71) and the state variables are computed from the input sensor signals (72), the desired force F_{;} at each suspension point of the vehicle may be computed by use of the control equations previously described (73). Next, the program determines the actuator commands from the desired forces F_{;} (74) and outputs the actuator commands to the actuators. In the case of a fully active suspension, wherein an actuator is capable of providing power to the suspension, the actuator command may cause the desired force itself to be applied to the wheel at the respective suspension point.

However, a damping control can apply only a damping or energy dissipating force; and the system must therefore specify what to do if the desired force is active: that is, it demands power input to the suspension apparatus which a damper cannot provide.

The process for a continuous semi-active (damping only) control is shown in the flow chart of Figure 9. To determine whether the desired force will be applied in a dissipative or active manner, the control checks the sign of the demand power, as determined by the sign of the product of the desired force F_{d} and the body/wheel relative velocity γ-x. It is not necessary to perform any numerical multiplication: the control need only compare the signs (80, 81). If the signs are the same, the power demanded be dissipative and may be applied by a damper. Thus, the desired force is chosen (82) and the actuator command generated accordingly. If the signs are opposite to one another, however, the power is active and cannot be supplied by a damper. Therefore, for a continuously variable damping actuator, the control outputs to the actuator an actuator command specifying the minimum damping force (83). The minimum damping force will probably not be zero, since the actuator will provide some restriction to fluid flow even with its damping selection valve 46 fully open.

The minimum damping force may even be set to a higher non-zero value for other reasons, such as system stability or smoothness of operation. This method is described by Dean Karnopp in "Active Damping in Road Vehicle Suspension Systems", Vehicle System Dynamics, 12 (1983), pp. 291-316, as well as in his earlier U.S. Patent No. 3,807,678 to Karnopp et al, issued Apr. 30, 1974.

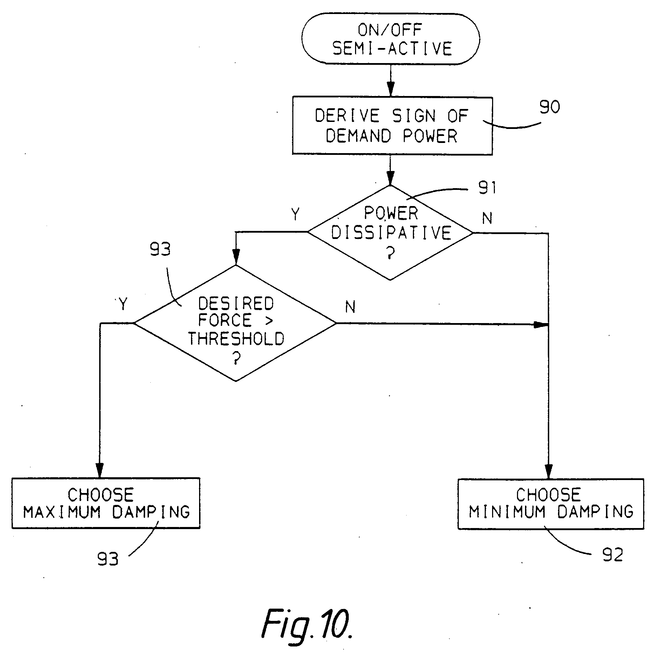

An on/off damping control uses an actuator such as actuator 20 that has a damping control valve 42 with two positions: a first creating a minimum damping force, and a second creating a maximum damping force. In such a system, active energy calls for the minimum damping force, as in the continuous damping force system. However, for a dissipative force, either the minimum or maximum damping force may be selected, depending on which is closest to the desired damping force F_{;}. For this purpose, a threshold curve may be defined between the minimum and maximum force curves; and the desired force F_{;} is compared to this intermediate force. If it is greater (in absolute value) than the threshold, the maximum force is chosen; if not, the minimum force curve is chosen. Thus, as shown in the flow chart of Figure 10, the determination of output force for such a system begins, as in the continuous damping case of Figure 9, by first deriving the sign of demand power (90) and then determining from this sign whether the demand power is dissipative or active (91). If active, the minimum damping force is selected (92); but, if dissipative, the desired force is compared (93) with a threshold stored in memory.

This threshold, represented by curve 23 in Figure 3, may be stored as a series of points (nine, for example) in memory. For a given desired force and body/wheel relative velocity γ-x, the actual threshold value is computed by interpolation between the closest two of the stored points. If the desired force exceeds the threshold, maximum damping is selected for the actuator command; however, if it does not exceed the threshold, minimum damping is selected.

Thus, the damping force used when the power is dissipative is not confined to the maximum damping force but is chosen to be the most appropriate of the maximum and minimum damping forces, depending on the desired force. This tends to reduce harshness of ride, especially on comparatively good roads, where suspension forces and accelerations are comparatively small and may for most of the time produce a desired suspension force lower than the threshold. In addition, the threshold allows an extra degree of freedom in suspension tuning, since it allows adjustment of the average damping by changing the threshold in software without changing the maximum damping level, which is determined by the orifices and valves of the damper.

With regard to the examples of Figures 6 and 7, of course, other detailed embodiments with different priorities may be envisioned within the general form of the gain switching method and apparatus shown. In addition, other sensed or derived wheel or body inputs such as vertical body corner velocities or heave, roll, pitch or vertical corner accelerations may be used as decision making inputs rather than the wheel or body velocities as shown.

Additional signals which may optionally be generated are a vehicle deceleration or braking signal by brake sensor 17, a vehicle speed signal from vehicle speed sensor 18 and a vehicle steering signal from vehicle steering sensor 19. These latter signals are not used in the embodiment of suspension control described above so will not be described in detail. However, many examples of such sensors and their uses for suspension control are known in the art and their application in a suspension control system of the type described above will be apparent to a person skilled in the art.

In practice, it has been found that the system described above provides excellent control of suspension movement without introducing the phase lag and inaccuracy problems of a Kalman filter or Luenberger observer to estimate non-measured states. In addition, the reduced need for processing throughput due to the absence of such filters or observers results in faster processing times and reduced cost in the processor hardware.

The controller can allow a great deal of flexibility in tailoring the "best" suspension behaviour for appeal to a particular vehicle operator. However, since the suspension behaviour can be entirely software definable, one of the advantages of this system is the ease with which suspension performance may be modified in real time merely by the substitution of one set of gains for another in the control equations.

## Claims

1. Suspension apparatus for use in a motor vehicle having a body (10) supported at each of a plurality of suspension points on a support (11), the apparatus comprising a plurality of actuators (12), each adapted to exert a variable substantially vertical force between the vehicle body (10) and a respective support (11) in response to a control signal; a controller (15) adapted to obtain a control signal for the actuators (12) from a linear combination of vehicle state variables obtained from sensed vehicle variables and including a vertical support velocity (xi) of a respective wheel and one or more body related variables, the contribution of each state variable to the control signal being determined by a respective gain value associated therewith; a memory containing a plurality of alternative sets of gain values; the controller comprising means responsive to at least one of the sensed vehicle variables to select between the alternative sets of gain values; characterized in that the vertical support velocity (xi) is an absolute velocity, each of the alternative sets of gain values is a full set of gain values for the linear combination which produces a separate predefined individual suspension performance emphasizing road isolation, vehicle body control or vehicle wheel control, and the selection between the alternative sets of gain values is based on one or more of the vertical support velocity (xi) for the respective wheel, the body heave velocity (H), the body roll velocity (R) and/or the body pitch velocity (P).

2. Suspension apparatus according to claim 1, wherein the memory (64,65) contains a set of isolation gain values suitable for minimising vehicle body motions for a comfortable ride quality, and a set of support gain values suitable for minimising vertical support motion; and the controller comprises means responsive to the vertical support velocity to select the set of support gain values when vertical support velocity exceeds a support velocity reference value, and to select the set of isolation gain values when the support velocity is less than the support velocity reference value.

3. Suspension apparatus according to claim 1 or 2, wherein the memory (64,65) contains a set of body gain values suitable for maintaining body attitude, and a set of support gain values suitable for minimising vertical support motion, and the controller comprises means responsive to the vertical support velocity to select the set of support gain values when vertical support velocity exceeds a support velocity reference value, and to select the set of body gain values when the wheel velocity is less than the support velocity reference value.

4. Suspension apparatus according to claim 3, wherein the memory (64,65) contains a set of isolation gain values suitable for vehicle body motion for a comfortable ride quality and the controller comprises means responsive to body velocity to select the set of isolation gain values when the body velocity is less than a reference body velocity and the support velocity is less than the reference support velocity.

5. Suspension apparatus according to claim 1, wherein the controller is adapted to select a first set of gain values suitable for controlling a sensed vehicle variable when one of the sensed vehicle variables exceeds a first predetermined reference value, and to select a second set of gain values when a sensed vehicle variable is less than a second predetermined reference value below the first predetermined reference value.

6. Suspension apparatus according to any preceding claim, wherein each support is a substantially unsprung wheel.

## Patentansprüche

1. Aufhängungsvorrichtung zum Gebrauch in einem Motorfahrzeug mit einer Karosserie (10), die auf jedem einer Vielzahl von Aufhängungspunkten auf einem Träger (11) getragen ist, wobei die Vorrichtung aufweist eine Vielzahl von Betätigern (12), von denen jeder dazu angepaßt ist, eine variable, im wesentlichen vertikale Kraft zwischen der Fahrzeugkarosserie (10) und einem respektiven Träger (11) im Ansprechen auf ein Regelsignal auszuüben; einen Regler (15), der dazu angepaßt ist, ein Regelsignal für die Betätiger (12) aus einer Linearkombination von Fahrzeugzustandsvariablen zu erhalten, die aus erfaßten Fahrzeugvariablen erhalten sind und eine vertikale Trägergeschwindigkeit (x'i) eines respektiven Rades und eine oder mehrere auf die Karosserie bezogene Variable umfassen, wobei der Beitrag von jeder Zustandvariablen zu dem Regelsignal durch einen respektiven Verstärkungswert bestimmt ist, der dazugehört; einen Speicher, der eine Vielzahl von alternativen Sätzen von Verstärkungswerten enthält; wobei der Regler ein Mittel umfaßt, das auf zumindest eine der erfaßten Fahrzeugvariablen anspricht, um zwischen den alternativen Sätzen von Verstärkungswerten auszuwählen, dadurch gekennzeichnet, daß die vertikale Trägergeschwindigkeit (x'i) eine absolute Geschwindigkeit ist, jeder der alternativen Sätze von Verstärkungswerten ein vollständiger Satz von Verstärkungswerten für die Linearkombination ist, welcher eine separate vordefinierte individuelle Aufhängungsleistung erzeugt, die Straßenisolation, Fahrzeugkarosserieregelung oder Fahrzeugradregelung betont, und die Auswahl zwischen den alternativen Sätzen von Verstärkungswerten auf einem oder mehreren der vertikalen Trägergeschwindigkeit (x'i) für das jeweilige Rad, der Karosserie-Hebe- und Senkgeschwindigkeit (H'), der Karosserie-Rollgeschwindigkeit (R') und/oder der Karosserie-Neigegeschwindigkeit (P') basiert.

2. Aufhängungsvorrichtung nach Anspruch 1, worin der Speicher (64, 65) einen Satz von Isolationsverstärkungswerten enthält, die zum Minimieren der Fahrzeugkarosseriebewegungen für eine komfortable Fahrqualität geeignet sind, und einen Satz von Trägerverstärkungswerten, die zum Minimieren der vertikalen Trägerbewegung geeignet sind; und die Regelung ein Mittel umfaßt, das auf die vertikale Trägergeschwindigkeit anspricht, um den Satz von Trägerverstärkungswerten auszuwählen, wenn die vertikale Trägergeschwindigkeit einen Trägergeschwindigkeitsreferenzwert überschreitet, und um den Satz von Isolationsverstärkungswerten auszuwählen, wenn die Trägergeschwindigkeit kleiner als der Trägergeschwindigkeitsreferenzwert ist.

3. Aufhängungsvorrichtung nach Anspruch 1 oder 2, worin der Speicher (64, 65) einen Satz von Karosserieverstärkungswerten enthält, die zum Aufrechterhalten der Karosserielage geeignet sind, und einen Satz von Trägerverstärkungswerten, die zum Minimieren der vertikalen Trägerbewegung geeignet sind, und die Regelung ein Mittel umfaßt, das auf die vertikale Trägergeschwindigkeit anspricht, um den Satz von Trägerverstärkungswerten auszuwählen, wenn die vertikale Trägergeschwindigkeit einen Trägergeschwindigkeitsreferenzwert überschreitet, und den Satz von Karosserieverstärkungswerten auszuwählen, wenn die Radgeschwindigkeit niedriger als der Trägergeschwindigkeitsreferenzwert ist.

4. Aufhängungsvorrichtung nach Anspruch 3, worin der Speicher (64, 65) einen Satz von Isolationsverstärkungswerten enthält, die für die Fahrzeugkarosseriebewegung für eine komfortable Fahrqualität geeignet sind, und die Regelung ein Mittel umfaßt, das auf die Karosseriegeschwindigkeit anspricht, um den Satz von Isolationsverstärkungswerten auszuwählen, wenn die Karosseriegeschwindigkeit niedriger als eine Referenzkarosseriegeschwindigkeit ist und die Trägergeschwindigkeit niedriger als die Bezugsträgergeschwindigkeit ist.

5. Aufhängungsvorrichtung nach Anspruch 1, worin der Regler dazu angepaßt ist, einen ersten Satz von Verstärkungswerten auszuwählen, der zum Regeln einer erfaßten Fahrzeugvariable geeignet ist, wenn eine der erfaßten Fahrzeugvariablen einen ersten vorbestimmten Referenzwert überschreitet, und einen zweiten Satz von Verstärkungswerten auszuwählen, wenn eine erfaßte Fahrzeugvariable niedriger als ein zweiter vorbestimmter Referenzwert unterhalb des ersten vorbestimmten Referenzwertes ist.

6. Aufhängungsvorrichtung nach irgendeinem vorhergehenden Anspruch, worin jeder Träger ein im wesentlichen ungefedertes Rad ist.

## Revendications

1. Dispositif de suspension destiné à être utilisé dans un véhicule à moteur ayant un châssis (10) supporté au niveau de chacun de plusieurs points de suspension sur un support (11), le dispositif comportant plusieurs actionneurs (12), adaptés chacun pour exercer une force pratiquement verticale variable entre le châssis (10) du véhicule et un support (11) respectif en réponse à un signal de commande; un dispositif de commande (15) adapté pour obtenir un signal de commande pour les actionneurs (12) à partir d'une combinaison linéaire de variables d'état du véhicule à partir de variables de véhicule détectées et comportant une vitesse verticale de support (x) d'une roue respective et une ou plusieurs variables liées au châssis, la contribution de chacune des variables d'état au signal de commande étant déterminée par une valeur de gain respective associée à celle-ci; une mémoire contenant plusieurs ensembles différents de valeurs de gain, le dispositif de commande comportant des moyens réagissant à au moins une des variables de véhicule détectées pour choisir entre les différents ensembles de valeurs de gain; caractérisé en ce que la vitesse verticale de support (x) est une vitesse absolue, chacun des différents ensembles de valeurs de gain est un ensemble complet constitué des valeurs de gain destinées à la combinaison linéaire qui produit une performance de suspension individuelle prédéfinie séparée accentuant l'isolement par rapport à la route, la commande du châssis du véhicule ou la commande des roues du véhicule, et le choix entre les différents ensembles de valeurs de gain est fondé sur une ou plusieurs variables parmi la vitesse verticale de support (x) pour la roue respective, la vitesse de soulèvement du châssis (H), la vitesse de roulis du châssis (R) et/ou la vitesse de tangage du châssis (P).

2. Dispositif de suspension selon la revendication 1, dans lequel la mémoire (64, 65) contient un ensemble de valeurs de gain d'isolement adaptées pour minimiser les mouvements du châssis du véhicule pour une qualité de transport confortable, et un ensemble de valeurs de gain de support adaptées pour minimiser le mouvement verticale du support; et le dispositif de commande comporte des moyens réagissant à la vitesse verticale du support pour choisir l'ensemble de valeurs de gain de support lorsque la vitesse verticale du support dépasse une valeur de référence de vitesse du support, et pour choisir l'ensemble de valeurs de gain d'isolement lorsque la vitesse de support est inférieure à la valeur de référence de vitesse du support.

3. Dispositif de suspension selon la revendication 1 ou 2, dans lequel la mémoire (64, 65) contient un ensemble de valeurs de gain du châssis adaptées pour maintenir l'assiette du châssis et un ensemble de valeurs de gain du support adaptées pour minimiser le mouvement vertical du support, et le dispositif de commande comporte des moyens réagissant à la vitesse verticale du support pour choisir l'ensemble de valeurs de gain de support lorsque la vitesse verticale du support dépasse une valeur de référence de vitesse du support, et pour choisir l'ensemble des valeurs de gain de châssis lorsque la vitesse de roue est inférieure à la valeur de référence de vitesse du support.

4. Dispositif de suspension selon la revendication 3, dans lequel la mémoire (64, 65) contient un ensemble de valeurs de gain d'isolement adaptées pour un mouvement du châssis du véhicule vers une qualité de transport confortable et le dispositif de commande comporte des moyens réagissant à la vitesse du châssis pour choisir l'ensemble de valeurs de gain d'isolement lorsque la vitesse du châssis est inférieure à une vitesse de référence du châssis et lorsque la vitesse du support est inférieure à la vitesse de référence du support.

5. Dispositif de suspension selon la revendication 1, dans lequel le dispositif de commande est adapté pour choisir un premier ensemble de valeurs de gain adaptées pour commander une variable de véhicule détectée lorsqu'une des variables de véhicule détectées dépasse une première valeur de référence prédéterminée, et pour choisir un second ensemble de valeurs de gain lorsqu'une variable de véhicule détectée est inférieure à une seconde valeur de référence prédéterminée située au-dessous de la première valeur de référence prédéterminée.

6. Dispositif de suspension selon l'une quelconque des revendications précédentes, dans lequel chaque support est une roue pratiquement non-suspendue.
